# EUROPEAN PATENT SPECIFICATION

(11) **EP 1 924 177 B1**
(45) Date of publication and mention of the grant of the patent: **25.05.2011**
(21) Application number: 06756039.1
(22) Date of filing: 01.06.2006
(51) Int. Cl.: A47J 31/44

(54) **PUMP UNIT AND DISPOSABLE CARTRIDGE FOR USE IN A BEVERAGE MAKER**
PUMPENEINHEIT UND EINWEGPATRONE FÜR DEN EINSATZ IN EINER GETRÄNKEZUBEREITUNGSVORRICHTUNG
UNITE DE POMPE ET CARTOUCHE JETABLE POUR DISPOSITIF DE PREPARATION DE BOISSON

(30) Priority: 07.06.2005 EP 05104937
(43) Date of publication of application: 28.05.2008
(60) Divisional application: 11161486.3
(73) Proprietor: Koninklijke Philips Electronics N.V., 5621 BA Eindhoven (NL)
(72) Inventor: FRAIJ, Fred, 5656 AA Eindhoven (NL); DUINEVELD, Paulus, C., 5656 AA Eindhoven (NL); HANSEN, Marinus, C., 5656 AA Eindhoven (NL); NOORDHUIS, Joeke, 5656 AA Eindhoven (NL)
(74) Representative: Damen, Daniel Martijn
(86) International application number: PCT/IB2006/051757
(87) International publication number: WO 2006/131857

(56) References cited:
- EP-A- 0 858 757
- WO-A-2005/063093
- US-A- 5 339 725

## Description

The present invention relates to a method for preparing a beverage. In particular, the present invention relates to a method for preparing a beverage on the basis of at least two fluids, for example a method for preparing hot milk on the basis of milk and steam, or a method for preparing juice on the basis of syrup and water.

In the state of the art, many types of devices for foaming milk to make cappuccino are known. In general, such devices comprise a steam generator and a steam tube connected to the steam generator, wherein an end of the steam tube merges into a nozzle arrangement having a vacuum chamber and channels for sucking in air and milk. A space offered by the vacuum chamber is considerably larger than a space offered by a narrowed end portion of the steam tube, so that a sudden pressure drop is obtained as soon as the steam reaches the vacuum chamber. Under the influence of the relatively low pressure prevailing in the vacuum chamber, the air and the milk are sucked in. Therefore, there is no need for applying separate pumps for causing a displacement of the milk and the air. An example of a device for making cappuccino according to the above-described method is known from EP 0 858 757 A1.

The principle of sucking in a fluid under the influence of a local underpressure that is obtained by successively conducting another fluid through a restriction and supplying this fluid to a chamber is often referred to as the venturi principle.

It is an object of the present invention to provide another method for preparing a beverage than the method in which the venturi principle is applied. In particular, it is an objective of the present invention to provide a method according to which a flow of one fluid is obtained under the influence of a flow of another fluid, while there is no need for having a successive arrangement of a restriction and a chamber, so that a simpler arrangement may be obtained.

The object of the present invention is achieved by a method for preparing a beverage on the basis of at least a first fluid and a second fluid, comprising a first step of providing the first fluid to a merging position and a second step following the first step of providing flow of the second fluid to the merging position; generating a flow of the first fluid under the influence of the flow of the second fluid by creating a local underpressure, wherein this local underpressure is exclusively obtained by allowing for a transfer of momentum from the flow of the second fluid to the first fluid at the merging position; letting the flow of the second fluid and the flow of the first fluid merge, wherein a joint flow on the basis of the first fluid and the second fluid is obtained; and allowing for an interaction of the first fluid and the second fluid in the joint flow.

According to the present invention, a different principle from the venturi principle is applied for the purpose of generating a flow of one fluid under the influence of a flow of another fluid. The applied principle will hereinafter be referred to as the ejector principle, and typically does not involve generating a flow of a first fluid under the influence of a local underpressure that is obtained by conducting a flow of a second fluid through a successive arrangement of a restriction and a chamber. Instead, according to the ejector principle, a flow of a first fluid is generated under the influence of a local pressure that is obtained by allowing for a transfer of momentum from a flow of a second fluid to the first fluid.

Furthermore, according to the present invention, the beverage is prepared by letting the flow of the second fluid and the flow of the first fluid merge, wherein a joint flow on the basis of the first fluid and the second fluid is obtained. In the joint flow, the first fluid and the second fluid are allowed to interact. In this way, a flow of the beverage is obtained.

In a simple embodiment of a device which is adapted for carrying out the method according to the present invention, a duct system having a first duct and a second duct is arranged, wherein the second duct merges into the first duct. In this configuration, a first portion of the first duct serves for conveying the first fluid, the second duct serves for conveying the second fluid, and a second portion of the first duct serves for conveying the joint flow that is obtained on the basis of the first fluid and the second fluid. In view of the fact that the ducts are adapted for conveying the fluids according to the ejector principle, the first duct has a constant cross-sectional area over its length, in other words, the first duct does not comprise any restrictions. Furthermore, the second portion of the first duct is long enough to obtain sufficient mixing of the first fluid and the second fluid, so that the beverage is formed. In case the first fluid comprises a liquid and the second fluid comprises steam, the second portion of the first duct is long enough for all of the steam to condense in the liquid. It is noted that the ducts may be tubes, but may also be recesses in a surface of a suitable element, for example.

The duct system having the two ducts as described can be easily extended by at least one additional duct, which, like the second duct, merges into the first duct. Furthermore, in case an additional duct is provided, the whole of the first duct and the second duct may be arranged such with respect to the additional duct that the first duct merges into the additional duct. In this way, two units for generating a flow of fluid under the influence of another flow of fluid according to the ejector principle are obtained, wherein the units are arranged in series.

Advantageously, in order to realize a transfer of momentum from the flow of the second fluid to the first fluid, which transfer is useful in the process of generating the flow of the first fluid, the flow of the second fluid and the flow of the first fluid merge at an angle which is smaller than 90°. This is realized in case an angle between longitudinal axes of the ducts of the above-described duct system is smaller than 90°. In case this angle were 90°, there would be no momentum of the flow of the second fluid acting in the direction of the first fluid. Consequently, this situation would not result in a flow of the first fluid. In general, the influence of momentum associated with the flow of the second fluid on the first fluid increases when the angle at which the fluids meet decreases, as a component of the momentum associated with the flow of the second fluid in the direction of the first fluid increases.

Within the scope of the present invention, it is possible that the flow of the second fluid and the flow of the first fluid merge at an angle of 0°. In such case, all of the momentum associated with the flow of the second fluid may be applied for the purpose of generating a flow of the first fluid. In a practical embodiment of a device which is adapted for carrying out the method according to the present invention, a duct system having three ducts is applied, wherein a second duct has a smaller cross-sectional area than a first duct and a third duct, wherein the second duct is arranged inside the first duct, or wherein the first duct and the second duct are arranged such as to extend next to each other, and wherein both the first duct and the second duct merge into the third duct. Preferably, in this embodiment, the third duct is arranged as a continuation of the first duct. An additional advantage of this embodiment is that a compact design is obtained.

In a preferred way of carrying out the method according to the present invention, the flow of the first fluid is locally restricted. For example, a portion of the duct for conveying the first fluid may be narrowed, or obstacles may be arranged in this duct. In this way, a possibility of adapting a flow rate of the first fluid is obtained. Within the scope of the present invention, the extent to which the flow of the first fluid is locally restricted may be adjustable. In case the second fluid is used to heat the first fluid, it is advantageous to have a possibility of controlling the flow rate of the first fluid, as in this way, a possibility of controlling the resulting temperature of the joint flow that is obtained on the basis of the first fluid and the second fluid is created. In general, the resulting temperature of the joint flow increases when the restriction to the flow of the first fluid increases.

A feasible application of the method according to the present invention is an application for the purpose of preparing hot milk. Preferably, for the purpose of such an application, the first fluid comprises milk, and the second fluid comprises steam. In principle, it is also possible that the first fluid comprises another liquid than milk. For the purpose of heating the liquid, the second fluid does not necessarily need to comprise steam. For example, it is also possible for the second fluid to comprise hot water.

When the method according to the present invention is applied, it is also possible to obtain froth, namely by letting in air to at least either the flow of the first fluid or the flow of the second fluid.

Within the scope of the present invention, more than one fluid may be provided and used for the purpose of obtaining a flow of beverage. For example, a flow of a third fluid may be provided, which is supplied to the joint flow that is obtained on the basis of the first fluid and the second fluid, so that a joint flow on the basis of the first fluid, the second fluid and the third fluid is obtained.

In case a third fluid is provided, it is also possible that a flow of the third fluid is generated under the influence of the joint flow that is obtained on the basis of the first fluid and the second fluid by creating a local underpressure, wherein this local underpressure is exclusively obtained by allowing for a transfer of momentum from the joint flow that is obtained on the basis of the first fluid and the second fluid to the third fluid. In such a case, the flow of the third fluid is obtained by another application of the ejector principle. Therefore, in order to have an effective generation of a flow of the third fluid, it is advantageous if the flow of the third fluid and the joint flow that is obtained on the basis of the first fluid and the second fluid merge at an angle which is smaller than 90°.

When the possibility of providing a third fluid and generating a flow of this third fluid under the influence of the joint flow that is obtained on the basis of the first fluid and the second fluid is applied, the first fluid may comprise water, the second fluid may comprise steam and the third fluid may comprise a liquid such as milk. Initially, a flow of water is obtained under the influence of the steam, while the water is also heated. Furthermore, the hot water is used for the purpose of obtaining a flow of the liquid and heating the liquid. In the process, due to the fact that the supplied liquid is mixed with the water, the concentration of the supplied liquid decreases. In order to eventually obtain a beverage that is ready for consumption, the liquid should initially be supplied in concentrated form.

When three fluids are provided, it is possible to obtain froth by letting in air to at least either the flow of the first fluid, or the flow of the second fluid, or the flow of the third fluid and the joint flow that is obtained on the basis of the first fluid and the second fluid.

It is noted that a device which is suitable for use in a process of preparing frothed milk for the purpose of making cappuccino is known from US 5 339 725. This device comprises a first duct and a second duct for the conveyance of milk and steam, a chamber for receiving the milk and the steam from the ducts and an element for conveying the first duct for conveying milk into the second duct for conveying steam. As a result of this arrangement, simultaneous delivery of milk and steam from an outlet of the conveyance element to the chamber is realized during operation of the device.

Particularly, the first duct merges into the second duct proximate to the outlet of the conveyance element, at an angle in a range from 15° to 45°, and the first duct has a smaller diameter than the second duct. When a flow of steam is realized in the second duct, a partial vacuum is produced, which is suitable for drawing the milk through the first duct.

The outlet of the conveyance element is arranged above a bottom of the chamber for receiving the milk and the steam at a predetermined distance, such that at a certain moment in the operation of the device, a level of a mixture formed by the milk and condensed steam reaches a level of the outlet of the conveyance element. From that moment on, an emulsion step begins, during which a large number of air particles is entrapped in the mixture. In this way, froth is formed, so that the device is capable of delivering hot frothed milk.

An important disadvantage of the device known from US 5 339 725 is that it has a rather complex and bulky arrangement of a conveyance element for conveying the first duct into the second duct and a chamber in which the actual preparation of the hot frothed milk takes place on the basis of the milk, the steam and, at a later stage during the operation of the device, the air. In a device which is adapted for carrying out the method according to the present invention, there is no need for a chamber besides a duct system, as the duct system is adapted for obtaining a flow of beverage in the form of a joint flow on the basis of the fluids supplied to the duct system, wherein the fluids are allowed to interact in the joint flow. For example, in case one of the fluids comprises steam, condensing of the steam takes place in the duct system. Preferably, the duct system is adapted for delivering the beverage directly to a receptacle for the beverage, such as a cup. In any case, when a device adapted for carrying out the method according to the present invention is applied, the fluids supplied to the duct system are not immediately released from the duct system after these fluids have been put in contact with each other.

In short, the present invention involves an application of the ejector principle, according to which a flow of a first fluid is generated under the influence of a flow of a second fluid by creating a local underpressure, wherein this local underpressure is obtained by allowing for a transfer of momentum from the flow of the second fluid to that of the first fluid. In the process, the flow of the second fluid and the flow of the first fluid are allowed to merge, wherein a joint flow on the basis of the first fluid and the second fluid is obtained, in which the fluids are mixed and have the same velocity.

The present invention provides a method for pumping fluids, which is applied in a method for preparing a beverage. In the process, the second fluid acts as a pumping fluid, whereas the first fluid acts as a pumped fluid. The pumping fluid may be driven by a pump or other suitable means.

The method according to the present invention involves a displacement of at least two fluids. It is possible to have a third fluid, which may be driven by a pump or the like, for example, but which may also be driven by the flow that is obtained on the basis of the first fluid and the second fluid. In principle, the number of fluids is not limited. Furthermore, it is possible to apply two or more pump units arranged in series.

It is noted that one fluid may be used for the purpose of heating another fluid. For example, this one fluid may comprise steam, while the other fluid comprises a liquid. In such a case, the liquid is heated on the basis of heat that is obtained as a result of condensation of the steam in the liquid. Furthermore, air may be supplied, so that froth may be formed.

The applied fluids may be a liquid, a gas or a combination of a liquid and the gas. In case the fluid is a liquid, solid particles or polymers may be added to the fluid.

The present invention does not only relate to a method, but also to various devices.

It is noted that WO2005/063093 in a final embodiment discloses a pump unit for use in a beverage maker comprising a duct system, wherein the duct system comprises a first and a second duct, and wherein the second duct merges into the first duct for establishing a joint flow of two fluids. The portion of the first duct wherein a joint flow is established is adapted for conveying the two fluids to an outlet of a beverage maker. The drawings indicate that at the position where the second duct merges into the first duct the cross-sectional area of the first duct suddenly increases. A first fluid flowing to the first duct will cause an overpressure at this merging position due to this increase in cross-sectional area. Apparently a joint flow is established by pumping both a first fluid into the first duct and pumping a second fluid into the second duct. In this respect it is noted that the cross-sectional area of the second duct is smaller than a portion of the first duct wherein the joint flow is established.

The present invention will now be explained in greater detail with reference to the figures, in which similar parts are indicated by the same reference signs, and in which:
Fig. 1 diagrammatically shows a disposable cartridge for use in a beverage maker, comprising an ejector pump unit according to a first preferred embodiment of the present invention;
Fig. 2 diagrammatically shows components of a beverage maker and the disposable cartridge shown in figure 1, wherein the disposable cartridge is placed in the beverage maker, and wherein the disposable cartridge is connected to components of the beverage maker;
Fig. 3 shows another disposable cartridge for use in a beverage maker, comprising the ejector pump unit according to the first preferred embodiment of the present invention;
Fig. 4 diagrammatically shows a duct system of an ejector pump unit according to a second preferred embodiment of the present invention;
Fig. 5 diagrammatically shows a duct system of an ejector pump unit according to a third preferred embodiment of the present invention; and
Fig. 6 diagrammatically shows a duct system of an ejector pump unit according to a fourth preferred embodiment of the present invention.

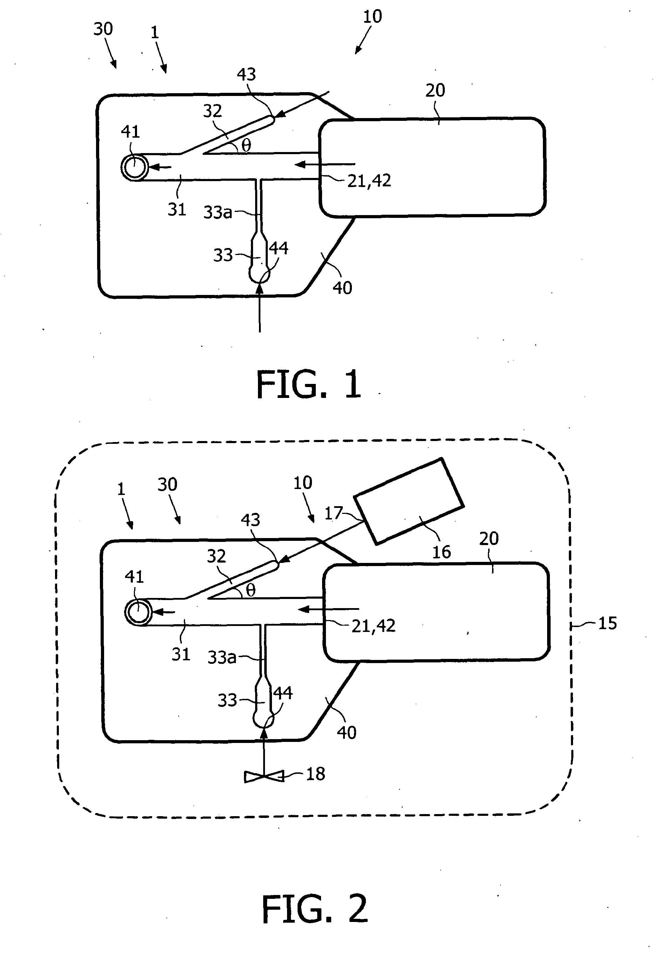

Figure 1 diagrammatically shows a disposable cartridge 10 for use in a beverage maker, comprising an ejector pump unit 1 according to a first preferred embodiment of the present invention. The disposable cartridge 10 as shown is intended for single use, in other words, it is only possible to use the cartridge 10 one time in a process of preparing a beverage. After the cartridge 10 has been applied one time, it is no longer useful, and it is only fit to be thrown away.

Figure 2 diagrammatically shows the disposable cartridge 10 and components of a beverage maker 15, wherein the disposable cartridge 10 is placed in the beverage maker 15, and wherein the disposable cartridge 10 is connected to components of the beverage maker 15. In figure 2, the beverage maker 15 in general is represented by a rectangle of dashed lines.

Besides the ejector pump unit 1, the disposable cartridge 10 comprises a reservoir 20 containing a liquid, for example milk or liquid coffee extract. In the example shown, the reservoir 20 is shaped as an elongated sealed pouch, which may be manufactured by providing two foil sheets and interconnecting these foil sheets along their peripheries. That does not alter the fact that the reservoir 20 may be realized in another suitable way, for example as a recess in a surface of an element of the disposable cartridge 10, wherein the recess is covered by a foil sheet.

The ejector pump unit 1 of the disposable cartridge 10 comprises a duct system 30. In the first preferred embodiment as shown, the duct system 30 comprises three ducts. A first duct 31 extends between an outlet 21 of the reservoir 20 and an outlet 41 of the ejector pump unit 1. In the following, an end of the first duct 31 which is connected to the outlet 21 of the reservoir 20 will be referred to as liquid inlet 42 of the duct system 30. The first duct 31 is shaped as a straight duct having a constant cross-sectional area over its length. A second duct 32 merges into the first duct 31, at a position between the connection of the first duct 31 to the outlet 21 of the reservoir 20 and the outlet 41 of the ejector pump unit 1. The same applies to a third duct 33. In the example, a portion 33a of the third duct 33 that is linked to the first duct 31 is narrowed.

According to a practical possibility, the ducts 31-33 are formed as recesses in a pump unit body 40 of the disposable cartridge 10. The recesses are covered by suitable means (not shown) for closing a top side of the recesses. An example of suitable closing means is a foil sheet. It is noted that the ducts 31-33 do not necessarily need to comprise recesses and closing means, as long as the ducts 31-33 are capable of conveying fluids. For example, the ducts 31-33 might as well be tubes. However, it is advantageous to have recesses and foil sheets for covering the recesses, as a manufacturing process of such an arrangement may be easier than a process of assembling a number of tubes, given the fact that the pump unit body 40 may be formed by using injection molding techniques.

Within the scope of the present invention, the shape of a cross-section of the ducts 31-33 of the duct system 30 may be any suitable shape. For example, the cross-section may be circular, rectangular, square or hexagonal. An advantage of a circular cross-section is that a relatively low flow resistance of the duct 31-33 is obtained.

The third duct 33 is at right angles to the first duct 31. An angle θ between a portion of the first duct 31 that is linked to the reservoir 20 and the second duct 32 is smaller than 90°. In the example shown, the angle θ is approximately 25°.

The disposable cartridge 10 is suitable to be applied for preparing a hot beverage such as hot milk or coffee. According to a practical possibility, during a process of preparing a beverage in which the disposable cartridge 10 is applied, the hot beverage is obtained by heating liquid initially contained by the reservoir 20 by means of steam. Therefore, the beverage maker 15 for receiving and operating the disposable cartridge 10 comprises a steam generator 16. In figure 2, it is shown that when the disposable cartridge 10 is placed in the beverage maker 15, the second duct 32 is connected to a steam socket 17 of the steam generator 16. In the following, an end of the second duct 32, which is connected to the steam socket 17 of the steam generator 16 when the disposable cartridge 10 is placed in the beverage maker 15, will be referred to as steam inlet 43 of the duct system 30.

Furthermore, in figure 2, it is shown that the beverage maker 15 comprises a valve 18, and that the third duct 33 is connected to the valve 18 when the disposable cartridge 10 is put in place in the beverage maker 15. By operating the valve 18, a user of the beverage maker 15 has a possibility of closing the third duct 33, and letting the beverage maker 15 perform a process of preparing a beverage by only using the first duct 31 and the second duct 32. Within the scope of the present invention, it is not necessary for the third duct 33 to be closable. Furthermore, in case means such as a valve 18 for giving the user an opportunity of closing the third duct 33 are provided, it is not necessary that such means are arranged in the beverage maker 15. Alternatively, such means may also be arranged in the disposable cartridge 10, although this is not a preferred option, in view of the fact that the cartridge 10 is only intended for single use.

In a process of preparing a beverage, in which the disposable cartridge 10 is applied, the third duct 33 serves as an air duct. In the following, an end of the third duct 33 which is connected to the valve 18 when the disposable cartridge 10 is placed in the beverage maker 15 will be referred to as air inlet 44 of the duct system 30. When the valve 18 is put in an opened position, air is supplied to the beverage, so that froth is obtained. However, when the valve 18 is put in a closed position, there will be no formation of froth in the beverage. Hence, by operating the valve 18, the user has a possibility of choosing whether or not to have a frothed beverage.

In order to improve froth quality and volume, obstructions (not shown) may be applied, which are arranged in a portion of the first duct 31 extending between the connection to the third duct 33 and the outlet 41 of the ejector pump unit 1. By applying such obstructions, frothing of the liquid is enhanced, as the obstructions increase flow resistance and/or create some extra agitation. Advantageously, at least a number of obstructions are arranged in a circle around the outlet 41 of the ejector pump unit 1.

In the following, a process of preparing a beverage, in which the disposable cartridge 10 and the beverage maker 15 are applied, will be described. For the sake of clarity, directions of incoming flows and an outgoing flow are indicated by means of arrows in figures 1 and 2.

Preparations of the process of preparing a beverage comprise the step of placing the disposable cartridge 10 in the beverage maker 15, and placing a receptacle such as a cup or the like underneath the outlet 41 of the ejector pump unit 1 of the cartridge 10. In the process of putting the disposable cartridge 10 in the right place in the beverage maker 15, connections are established between the steam socket 17 of the steam generator 16 of the beverage maker 15 and the steam inlet 43 of the duct system 30 of the ejector pump unit 1 of the cartridge 10, and between the valve 18 of the beverage maker 15 and the air inlet 44 of the duct system 30.

When the process of preparing the beverage is started, it is important for a liquid to be allowed to flow from the reservoir 20 to the first duct 31, through the liquid inlet 42 of the first duct 31. Therefore, suitable means (not shown) are applied for piercing the foil of the reservoir 20 at an appropriate position. For example, such means may comprise a movably arranged pin.

Depending on input provided by the user, the valve 18 is in the opened position or in the closed position. In the following, a process for preparing a beverage in which the valve 18 is in the opened position, i.e. a process for preparing a frothed beverage, will be described.

The actual process of preparing the beverage starts when the liquid is present in the first duct 31 and the steam generator 16 is in operation, wherein steam enters the second duct 32, through the steam inlet 43. At the other end of the second duct 32, i.e. the end where the second duct 32 merges into the first duct 31, momentum is transferred from the flow of steam to the liquid, as a result of which a local underpressure is obtained. Under the influence of this local underpressure, the liquid is drawn out of the reservoir 20, wherein a flow of the liquid which is directed to the outlet 41 of the ejector pump unit 1 is generated. In the process, the steam condenses in the liquid, so that the liquid is heated, and the effect of the underpressure is enhanced. Furthermore, air is sucked into the first duct 31, through the third duct 33, and gets entrained in the flow of the liquid and the condensed steam. In this way, a hot frothed beverage is obtained, which exits the ejector pump unit 1 through the outlet 41.

During operation of the ejector pump unit 1, the steam is applied for the purpose of pumping the liquid from the reservoir 20 to the outlet 41, wherein a flow of the liquid is obtained under the influence of the flow of the steam. In particular, a local underpressure is obtained by a transfer of momentum from the flow of the steam to the liquid, and liquid is sucked into the first duct 31 under the influence of this underpressure. Additionally, condensation of the steam in the liquid takes place, as a result of which the liquid is heated. The principle according to which the pumping action of the steam on the liquid is obtained is also referred to as ejector principle.

In order to have a good pumping action, it is important for the angle θ between the first duct 31 and the second duct 32 to be smaller than 90°. In case the angle θ were 90°, the flow of the steam would practically not lead to a flow of the liquid in the first duct 31, as in that case, the steam would not have a momentum in a direction in which motion of the liquid is allowed, i.e. a direction in which a longitudinal axis of the first duct 31 extends. In case the angle θ were larger than 90°, the influence of the flow of the steam on the liquid in the first duct 31 would only cause the liquid to flow backward, i.e. in a direction toward the reservoir 20. When the liquid is milk, a good performance of the ejector pump unit 1 is obtained when the angle θ between the first duct 31 and the second duct 32 is about 25°, which does not imply that the angle θ may not be smaller or larger.

A ratio between an obtained flow rate of the liquid and a flow rate of the steam is related to a ratio between a cross-sectional area of the first duct 31 and a cross-sectional area of the second duct 32. For a given flow rate of the steam, the obtained flow rate of the liquid increases when the cross-sectional area of the second duct 32 is decreased with respect to the cross-sectional area of the first duct 31. Hence, it is a preferred option to have an ejector pump unit 1 in which a cross-sectional area of the second duct 32 is smaller than a cross-sectional area of the first duct 31.

It has already been noted that the third duct 33 for letting in air to the first duct 31 may be closed by means of the valve 18. In an alternative embodiment of the ejector pump unit 1, which is only suitable to be applied for the purpose of making a hot beverage without froth, the third duct 33 may be omitted altogether.

Instead of the valve 18 as shown, other means may be provided for offering a user a choice between a beverage with froth and a beverage without froth. For example, the air inlet 44 may be closed as standard, wherein the beverage maker 15 comprises means for opening the air inlet 44 if so desired. In a practical embodiment, the air inlet 44 may be closed by a foil, wherein the beverage maker 15 comprises means like a movably arranged pin for piercing the foil.

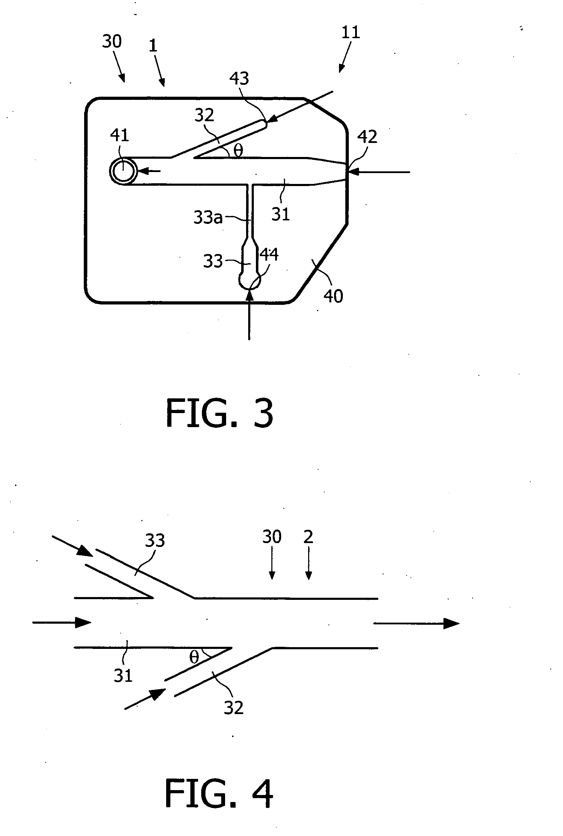

It is not necessary for the disposable cartridge 10 to be provided with a reservoir 20 containing the liquid to be used in the process of preparing the beverage. It is also possible that the beverage maker 15 comprises such a reservoir, wherein the liquid inlet 42 of the first duct 31 is connectable to the reservoir, and wherein an open communication between the first duct 31 and the reservoir may be established upon receipt of the cartridge in the beverage maker 15. Furthermore, it is possible that an external reservoir is used, which may even be a carton containing the liquid, and that a hose for putting the first duct 31 in communication with the liquid in the external reservoir is applied. For the purpose of illustration, a disposable cartridge 11 having only the ejector pump unit 1 is shown in figure 3.

In principle, it is possible to apply a cartridge which is intended for multiple use. Such a cartridge may be of the same design as the disposable cartridge 10 shown. In case the cartridge comprises a reservoir 20, this reservoir 20 is arranged such as to be refillable, or this reservoir 20 comprises a quantity of liquid which is adapted for being used for a predetermined number of uses, wherein the number is more than one. In case the cartridge does not have a reservoir 20, it is up to the user to decide how many times the cartridge 11 will be used before it is thrown away.

The beverage maker 15 may be arranged so as to supply different quantities of beverage, depending on a choice of the user. For example, the user may choose to have a single quantity of beverage or a double quantity of beverage. In such a case, the reservoir 20 of the disposable cartridge 10 may comprise a double quantity of liquid, so that the disposable cartridge 10 is suitable to be used two times for the purpose of preparing a single quantity of beverage or one time for the purpose of preparing a double quantity of beverage.

With respect to the steam generator 16, it is noted that the beverage maker 15 may comprise a refillable water tank for containing water and a water supply arrangement for supplying water to the steam generator 16 during operation of the beverage maker 15, in any suitable manner known per se. It is also possible for the steam generator 16 to be connected to the water mains. It is noted that in case one or more of the fluids used for the purpose of preparing a beverage by applying the ejector pump unit 1 comprises water, the relevant inlet or inlets of the duct system 30 of the ejector pump unit 1 may also be connected to the water tank or the water mains.

Within the scope of the present invention, it is not necessary to use a disposable cartridge 10, 11 in a process of preparing a beverage, although this way of preparing a beverage has important advantages. One of these advantages is that the applied liquid and the obtained beverage only contact elements of the disposable cartridge 10, 11, so that the beverage maker 15 does not become contaminated. This is especially important in case the liquid is apt to go bad relatively quickly, which is the case when the liquid comprises milk, for example.

It is possible to have an ejector pump unit 1 which is fixedly arranged in the beverage maker 15. In such a case, the beverage maker 15 may comprise a refillable reservoir for containing the liquid. According to another possibility, suitable means such as a hose for putting the ejector pump unit 1 in communication with liquid in an external reservoir are provided. The beverage maker 15 may also be adapted for receiving disposable reservoirs containing the liquid.

Whether the ejector pump unit 1 according to the present invention is fixedly arranged in a beverage maker 15 or not, an important feature of the ejector pump unit 1 is that for the purpose of pumping a first fluid, a flow of a second fluid is applied. In particular, the flow of the second fluid is allowed to transfer momentum to the first fluid, so that a local underpressure is obtained. Under the influence of this underpressure, the flow of the first fluid is generated. In the process, the first fluid and the second fluid are joined in one flow. The first fluid may be a liquid and the second fluid may be steam, wherein the steam is used to generate a flow of the liquid and to heat the liquid at the same time.

The ejector pump unit 1 according to the present invention comprises a duct system 30. Within the scope of the present invention, numerous possibilities of the number of ducts of the duct system 30 and the configuration of these ducts exist. The duct system 30 may be designed as the duct system 30 shown in figures 1-3, but may also be of a different design. In the following, a number of possible other designs will be explained with reference to figures 4-8. For the sake of clarity, directions of flows which are present in the duct systems 30 shown during operation are indicated by means of arrows in the figures.

In figure 4, a duct system 30 of an ejector pump unit 2 according to a second preferred embodiment of the present invention is shown.

Like the duct system 30 of the ejector pump unit 1 according to the first preferred embodiment of the present invention, the duct system 30 of the ejector pump unit 2 according to the second preferred embodiment of the present invention comprises three ducts. A first duct 31 is adapted for supplying a first fluid and receiving a second fluid and a third fluid, wherein a second duct 32 is adapted for supplying the second fluid, and is arranged such as to merge into the first duct 31, and wherein a third duct 33 is adapted for supplying the third fluid, and is arranged such as to merge into the first duct 31 as well.

In a direction in which the flows take place during operation, an angle θ between a longitudinal axis of the first duct 31 and a longitudinal axis of the second duct 32 is smaller than 90°, in the order of about 25°.

The first fluid may be a liquid such as milk or coffee, the second fluid may be steam, and the third fluid may be air. During operation of the ejector pump unit 2, only the steam acts like a pumping fluid. When the steam is supplied from the second duct 32, a local underpressure is created, due to a transfer of momentum from the flow of the steam to the liquid. Under the influence of the local underpressure, a flow of the liquid is generated in the first duct 31, while air is sucked in through the third duct 33. Eventually, a flow of the first fluid, the second fluid and the third fluid is obtained. In the process, the liquid is heated by means of the steam, and the liquid is frothed by means of the air.

With respect to the second fluid, it is noted that this fluid does not necessarily need to be steam. It is also possible to use hot water instead of steam, or a flow of another fluid for the purpose of generating a flow of the liquid, wherein the fluid does not necessarily need to be capable of heating the liquid.

With respect to the third fluid, it is noted that this fluid does not necessarily need to be air. It is also possible to have one or more inlets for letting in air arranged in at least one of the first duct 31, the second duct 32 and the third duct 33, wherein the third fluid as supplied by the third duct 33 may be another fluid instead of air.

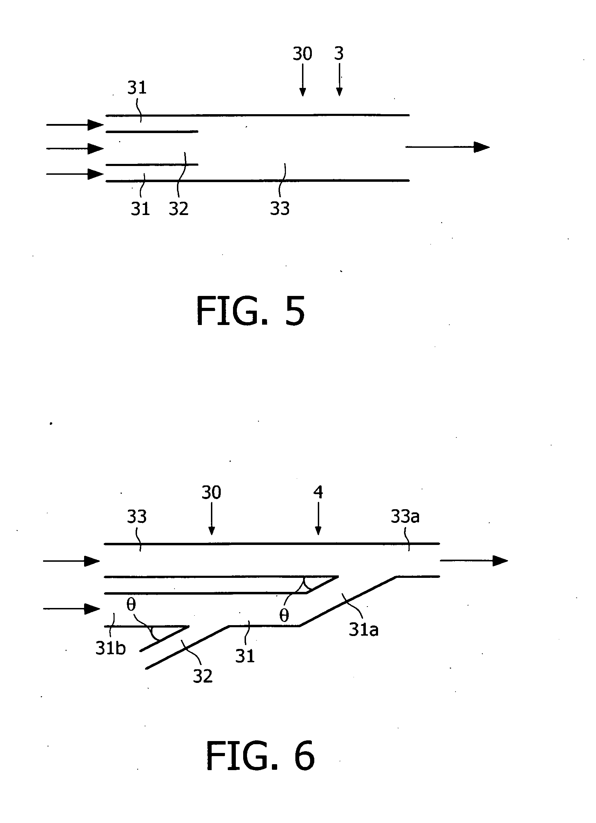

In figure 5, a duct system 30 of an ejector pump unit 3 according to a third preferred embodiment of the present invention is shown.

The duct system 30 of the ejector pump unit 3 according to the third preferred embodiment of the present invention comprises three ducts, wherein a second duct 32 has a smaller cross-sectional area than a first duct 31 and a third duct 33, wherein the second duct 32 is arranged inside the first duct 31, and wherein both the first duct 31 and the second duct 32 merge into the third duct 33 which is realized as a continuation of the first duct 31. Hence, in the duct system 30 of the ejector pump unit 3 according to the third preferred embodiment of the present invention, longitudinal axes of the ducts 31-33 are substantially parallel. In case the ducts 31-33 comprise tubes, the second duct 32 is encompassed by the first duct 31, wherein the second duct 32 is preferably coaxially arranged with respect to the first duct 31.

According to a first possibility, only the second duct 32 is used for the purpose of supplying a pumping fluid, i.e. a fluid which is supplied in a flow, while the first duct 31 is used for the purpose of supplying a fluid that is to be put in motion by means of the pumping fluid. In that case, during operation of the ejector pump unit 3 according to the third preferred embodiment of the present invention, a transfer of momentum from the pumping fluid to the fluid supplied by the first duct 31 is obtained, wherein a local underpressure is obtained in an area where the first duct 31 and the second duct 32 merge into the third duct 33. Under the influence of the local underpressure, the fluid is drawn out of the first duct 31, wherein a flow of this fluid is obtained. In the third duct 33, the fluid supplied by the first duct 31 and the pumping fluid get mixed.

According to a second possibility, only the first duct 31 is used for the purpose of supplying the pumping fluid, while the second duct 32 is used for the purpose of supplying the fluid that is to be put in motion by means of the pumping fluid. In that case, during operation of the ejector pump unit 3 according to the third preferred embodiment of the present invention, a flow of the fluid supplied by the second duct 32 is generated under the influence of the local underpressure that is obtained in the area where the first duct 31 and the second duct 32 merge into the third duct 33 as a result of a transfer of momentum from the pumping fluid to the fluid supplied by the second duct 32. Also, in that case, the fluid supplied by the second duct 32 and the pumping fluid get mixed in the third duct 33.

In both possibilities, the pumping fluid may also be used to heat the other fluid that is supplied to the third duct 33, and may comprise steam or hot water, for example.

It is possible to have one or more inlets for letting in air present in the first duct 31, so that the beverage that is eventually obtained by applying the ejector pump unit 3 according to the third preferred embodiment of the present invention may be frothed.

It is also possible to have another arrangement of the ducts 31-33 than the arrangement as shown. In particular, the second duct 32 does not need to be arranged such as to extend inside the first duct 31. According to another feasible option, the second duct 32 may be arranged so as to extend next to the first duct 31.

In figure 6, a duct system 30 of an ejector pump unit 4 according to a fourth preferred embodiment of the present invention is shown.

In fact, the ejector pump unit 4 according to the fourth preferred embodiment of the present invention comprises two ejector pumps arranged in series. A first pump comprises a first duct 31 and a second duct 32 which merges into the first duct 31, and a second pump comprises a third duct 33 and an outlet portion 31a of the first duct 31, wherein the outlet portion 31a of the first duct 31 merges into the third duct 33. In the first pump, an angle θ between the first duct 31 and the second duct 32 is smaller than 90°, in the order of about 25°. In the second pump, the same applies to an angle θ between the third duct 33 and the outlet portion 31 a of the first duct 31.

During operation of the ejector pump unit 4 according to the fourth preferred embodiment of the present invention, a first fluid is supplied by an inlet portion 31b of the first duct 31, a second fluid is supplied by the second duct 32, and a third fluid is supplied by the third duct 33. The first fluid in the first duct 31 is put in motion under the influence of a flow of the second fluid supplied by the second duct 32, in particular under the influence of a local underpressure that is obtained by a transfer of momentum from the flow of the second fluid to the first fluid. In a similar manner, the third fluid in the third duct 33 is put in motion under the influence of a joint flow that is obtained on the basis of the first fluid and the second fluid in the first pump, and which is supplied by the outlet portion 31a of the first duct 31. As a result, a joint flow on the basis of the first fluid, the second fluid and the third fluid is obtained, which exits the ejector pump unit 4 through an outlet portion 33a of the third duct 33.

For example, the first fluid may comprise water and the second fluid may comprise steam, wherein the steam is used to generate a flow of the water and to heat the water. In the second pump, the flow of hot water that is generated in the first pump is used for the purpose of putting the fluid in the third duct 33 in motion and heating this fluid. The third fluid may comprise concentrated milk, for example.

It is possible to have one or more inlets for letting in air arranged in at least one of the first duct 31, the second duct 32 and the third duct 33, so that the beverage that is eventually obtained by applying the ejector pump unit 4 according to the fourth preferred embodiment of the present invention may be frothed.

It will be clear to a person skilled in the art that the scope of the present invention is not limited to the examples discussed in the foregoing, but that several amendments and modifications thereof are possible without deviating from the scope of the present invention as defined in the attached claims.

Within the scope of the present invention, various features which are described with respect to one particular embodiment of a duct system 30 of an ejector pump unit according to the present invention are also applicable to other embodiments.

In the foregoing, it has been noted that a value of 25° is a suitable value of an angle θ between a flow of a first fluid and a flow of a second fluid, wherein the flow of the second fluid is used as a pumping fluid for generating a flow of the first fluid. This value of the angle θ is particularly suitable in case the first fluid comprises milk and the second fluid comprises steam. However, depending on various factors, among which the type of the fluids, it may be advantageous to have a smaller or larger angle.

The ejector pump units 1-6 as disclosed are suitable to be applied in processes of preparing various beverages, wherein it does not matter whether these beverages are hot or cold. An important aspect of the present invention is that a flow of one fluid is used to put another fluid in motion by creating a local underpressure, wherein this local underpressure is obtained by allowing for a transfer of momentum from the flow of the one fluid to the other fluid. Advantageously, in case there is a need for preparing a hot beverage, the fluid which is used for pumping the other fluid is also suitable for heating the other fluid. In this respect, it is noted that steam is very well applicable as the pumping fluid.

In general, when the ejector principle is applied, and the first fluid, i.e. the fluid to be pumped comprises a liquid, and the second fluid, i.e. the pumping fluid comprises steam, it is preferred that a cross-sectional area of a duct for conveying the liquid is larger than a cross-sectional area of a duct for conveying the steam. For example, a diameter of the duct for conveying the liquid may be 2.5 mm, whereas a diameter of the duct for conveying the steam may be 1.5 mm.

In the duct system 30 of the ejector pump unit 1-6, an inlet may be arranged for letting in a dry substance such as cacao powder to the duct system, wherein the disposable cartridge 10, 11 or the beverage maker 15 may be provided with a reservoir for containing the dry substance. In such a case, the process of preparing a beverage also involves adding the dry substance.

In the foregoing, a disposable cartridge 10, 11 is disclosed, which is suitable for use in a process of preparing a beverage. The disposable cartridge 10, 11 comprises a pump unit 1 for conveying and mixing at least two fluids. The pump unit 1 comprises a duct system 30 having a first duct 31 and a second duct 32 which merges into the first duct 31, wherein an angle θ between the ducts 31, 32 is smaller than 90°. In a process of preparing a beverage, a first fluid is supplied by an inlet portion 31b of the first duct 31, and a flow of a second fluid is supplied by the second duct 32. At the position where the ducts 31, 32 meet, a transfer of momentum from the flow of the second fluid to the first fluid takes place, so that an underpressure is obtained, as a result of which the first fluid is put in motion. Furthermore, a joint flow of the first fluid and the second fluid is obtained in an outlet portion 31a of the first duct 31. The second fluid may also be used for the purpose of heating the first fluid.

## Claims

1. Method for preparing a beverage on the basis of at least a first fluid and a second fluid, comprising a first step of providing the first fluid to a merging position and a second step following the first step of providing flow of the second fluid to the merging position; generating a flow of the first fluid under the influence of the flow of the second fluid by creating a local underpressure, wherein this local underpressure is exclusively obtained by allowing for a transfer of momentum from the flow of the second fluid to the first fluid at the merging position; letting the flow of the second fluid and the flow of the first fluid merge, whereby a joint flow on the basis of the first fluid and the second fluid is obtained; and allowing for an interaction of the first fluid and the second fluid in the joint flow.

2. Method according to claim 1, wherein the flow of the second fluid and the flow of the first fluid merge at an angle (θ) that is smaller than 90°.

3. Method according to claim 2, wherein the flow of the second fluid and the flow of the first fluid merge at an angle (θ) of 0°.

4. Method according to any one of claims 1-3, wherein the first fluid comprises a liquid, and wherein the second fluid comprises steam.

5. Method according to any one of claims 1-4, wherein air is let into at least either the flow of the first fluid or the flow of the second fluid.

6. Method according to any one of claims 1-5, further comprising the steps of providing a third fluid; generating a flow of the third fluid under the influence of the joint flow that is obtained on the basis of the first fluid and the second fluid by creating a local underpressure, wherein this local underpressure is exclusively obtained by allowing for a transfer of momentum from the joint flow that is obtained on the basis of the first fluid and the second fluid to the third fluid; and letting the joint flow that is obtained on the basis of the first fluid and the second fluid and the flow of the third fluid merge, wherein a joint flow on the basis of the first fluid, the second fluid and the third fluid is obtained.

7. Method according to claim 6, wherein the flow of the third fluid and the joint flow that is obtained on the basis of the first fluid and the second fluid merge at an angle (θ) that is smaller than 90°.

8. Method according to claim 6 or 7, wherein the first fluid and the third fluid comprise a liquid, and wherein the second fluid comprises steam.

9. Method according to any one of claims 6-8, wherein air is let into at least either the flow of the third fluid or the joint flow that is obtained on the basis of the first fluid and the second fluid.

10. Method according to any one of claims 1-9, wherein a duct system (30) is provided, and wherein the flows as mentioned take place in ducts (31, 32, 33) of the duct system (30).

11. Method according to any one of claims 1-10, wherein a dry substance in the form of small particles is supplied to at least one of the flows as mentioned.

## Patentansprüche

1. Verfahren zur Zubereitung eines Getränks auf der Grundlage von zumindest einem ersten Fluid und einem zweiten Fluid, wonach in einem ersten Schritt das erste Fluid einer Zusammenführungsposition zugeführt wird und in einem auf den ersten Schritt folgenden zweiten Schritt ein Strom des zweiten Fluids der Zusammenführungsposition zugeführt wird; ein Strom des ersten Fluids unter dem Einfluss des Stroms des zweiten Fluids durch Erzeugen eines lokalen Unterdrucks generiert wird, wobei dieser lokale Unterdruck ausschließlich **dadurch** erreicht wird, dass an der Zusammenführungsposition ein Impulsübertrag von dem Strom des zweiten Fluids auf das erste Fluid ermöglicht wird; ein Ineinanderfließen des Stroms des zweiten Fluids und des Stroms des ersten Fluids ermöglicht wird, wodurch ein gemeinsamer Strom auf der Basis des ersten Fluids und des zweiten Fluids erhalten wird; und in dem gemeinsamen Strom ein Zusammenwirken des ersten Fluids und des zweiten Fluids ermöglicht wird.

2. Verfahren nach Anspruch 1, wobei sich der Strom des zweiten Fluids und der Strom des ersten Fluids in einem Winkel (θ), der kleiner als 90° ist, miteinander verbinden.

3. Verfahren nach Anspruch 2, wobei sich der Strom des zweiten Fluids und der Strom des ersten Fluids in einem Winkel (θ) von 0° miteinander verbinden.

4. Verfahren nach einem der Ansprüche 1-3, wobei das erste Fluid aus einer Flüssigkeit und das zweite Fluid aus Dampf besteht.

5. Verfahren nach einem der Ansprüche 1-4, wobei zumindest entweder dem Strom des ersten Fluids oder dem Strom des zweiten Fluids Luft zugeführt wird.

6. Verfahren nach einem der Ansprüche 1-5, das weiterhin Schritte umfasst, wonach ein drittes Fluid vorgesehen ist; ein Strom des dritten Fluids unter dem Einfluss des gemeinsamen Stroms erzeugt wird, welcher auf der Basis des ersten Fluids und des zweiten Fluids durch Erzeugen eines lokalen Unterdrucks erhalten wird, wobei dieser lokale Unterdruck ausschließlich **dadurch** erreicht wird, dass ein Impulsübertrag von dem gemeinsamen Strom, der auf der Grundlage des ersten Fluids und des zweiten Fluids erhalten wird, auf das dritte Fluid ermöglicht wird; ein Ineinanderfließen des gemeinsamen Stroms, der auf der Basis des ersten Fluids und des zweiten Fluids erhalten wird, und des Stroms des dritten Fluids ermöglicht wird, wodurch ein gemeinsamer Strom auf der Basis des ersten Fluids, des zweiten Fluids und des dritten Fluids erhalten wird.

7. Verfahren nach Anspruch 6, wobei sich der Strom des dritten Fluids und der gemeinsame Strom, der auf der Basis des ersten Fluids und des zweiten Fluids erhalten wird, in einem Winkel (θ), der kleiner als 90° ist, miteinander verbinden.

8. Verfahren nach Anspruch 6 oder 7, wobei das erste und das dritte Fluid aus einer Flüssigkeit bestehen und das zweite Fluid aus Dampf besteht.

9. Verfahren nach einem der Ansprüche 6-8, wobei zumindest entweder dem Strom des dritten Fluids oder dem gemeinsamen Strom, der auf der Basis des ersten Fluids und des zweiten Fluids erhalten wird, Luft zugeführt wird.

10. Verfahren nach einem der Ansprüche 1-9, wobei ein Leitungssystem (30) vorgesehen ist, und wobei Leitungen (31, 32, 33) des Leitungssystems (30) von den Strömen, wie erwähnt, durchströmt werden.

11. Verfahren nach einem der Ansprüche 1-10, wobei mindestens einem der Ströme, wie erwähnt, eine Trockensubstanz in Form kleiner Partikel zugeführt wird.

## Revendications

1. Procédé pour préparer une boisson sur la base d'au moins un premier fluide et un second fluide, comprenant une première étape destinée à fournir le premier fluide dans une position de mélange et une seconde étape suivant la première étape de fourniture du flux du second fluide dans la position de mélange ; générer un flux du premier fluide sous l'influence du flux du second fluide en créant une dépression locale, dans lequel cette dépression locale est obtenue exclusivement en permettant un transfert de l'élan du flux du second fluide au premier fluide dans la position de mélange ; laisser le flux du second fluide et le flux du premier fluide se mélanger, moyennant quoi un flux conjoint est obtenu, basé sur le premier fluide et le second fluide ; et permettre une interaction du premier fluide et du second fluide dans le flux conjoint.

2. Procédé selon la revendication 1, dans lequel le flux du second fluide et le flux du premier fluide se mélangent à un angle (θ) inférieur à 90°.

3. Procédé selon la revendication 2, dans lequel le flux du second fluide et le flux du premier fluide se mélangent à un angle (θ) de 0°.

4. Procédé selon l'une quelconque des revendications 1 à 3, dans lequel le premier fluide comprend un liquide, et dans lequel le second fluide comprend de la vapeur.

5. Procédé selon l'une quelconque des revendications 1 à 4, dans lequel de l'air est admis dans au moins le flux du premier fluide ou le flux du second fluide.

6. Procédé selon l'une quelconque des revendications 1 à 5, comprenant également les étapes destinées à fournir un troisième fluide ; générer un flux du troisième fluide sous l'influence du flux conjoint obtenu sur la base du premier fluide et du second fluide en créant une dépression locale, dans lequel cette dépression locale est obtenue exclusivement en permettant un transfert de l'élan du flux conjoint obtenu sur la base du premier fluide et du second fluide au troisième fluide ; et laisser se mélanger le flux conjoint obtenu sur la base du premier fluide et du second fluide et le flux du troisième fluide, moyennant quoi un flux conjoint sur la base du premier fluide, du second fluide et du troisième fluide est obtenu.

7. Procédé selon la revendication 6, dans lequel le flux du troisième fluide et le flux conjoint obtenu sur la base du premier fluide et du second fluide se mélangent à un angle (θ) inférieur à 90°.

8. Procédé selon la revendication 6 ou 7, dans lequel le premier fluide et le troisième fluide comprennent un liquide, et dans lequel le second fluide comprend de la vapeur.

9. Procédé selon l'une quelconque des revendications 6 à 8, dans lequel de l'air est admis dans au moins le flux du troisième fluide ou le flux conjoint obtenu sur la base du premier fluide et du second fluide.

10. Procédé selon l'une quelconque des revendications 1 à 9, dans lequel un réseau de conduits (30) est prévu, et dans lequel les flux susmentionnés s'écoulent dans les conduits (31, 32, 33) du réseau de conduits (30).

11. Procédé selon l'une quelconque des revendications 1 à 10, dans lequel une substance sèche sous la forme de petites particules est alimentée à au moins l'un des flux susmentionnés.
